# EUROPÄISCHE PATENTSCHRIFT

(11) **EP 0 874 762 B1**
(45) Veröffentlichungstag und Bekanntmachung des Hinweises auf die Patenterteilung: **01.12.1999**
(21) Anmeldenummer: 97900044.5
(22) Anmeldetag: 09.01.1997
(51) Int. Cl.: B65D 51/00

(54) **VERSCHLUSS FÜR EINEN EINFÜLLSTUTZEN**
FILLER NECK CAP ASSEMBLY
SYSTEME DE FERMETURE POUR TUBULURE DE REMPLISSAGE

(30) Priorität: 09.01.1996 AT 3496
(43) Veröffentlichungstag der Anmeldung: 04.11.1998
(73) Patentinhaber: BLAU International Gesellschaft m.b.H., 8160 Preding (AT)
(72) Erfinder: MUTH, Manfred, Karl, Joachim, D-58840 Plettenberg (DE); PALVÖLGYI, Sandor, A-8200 Gleisdorf (AT)
(74) Vertreter: Weiser, Andreas, Dip.-Ing.
(86) Internationale Anmeldenummer: AT9700001
(87) Internationale Veröffentlichungsnummer: WO9727122

(56) Entgegenhaltungen:
- EP-A- 0 064 427
- DE-A- 3 019 650
- DE-A- 3 827 791
- US-A- 4 133 346

## Beschreibung

Die vorliegende Erfindung betrifft einen Verschluß für einen Einfüllstutzen, insbesondere eines Fahrzeug-Kraftstofftankes, mit einem in das Einfüllstutzenende abdichtend einsetzbaren, etwa topfförmigen Einsatz, der mit Vorsprüngen zum Eingreifen in Bajonett- oder Schraubgewindenuten des Einfüllstutzens ausgestattet ist, an seinem aus dem Einfüllstutzenende ragenden oberen Ende von einer Abdeckkappe übergriffen ist, und ein Überdruck-Unterdruckventil aufnimmt, welches über Öffnungen im Boden des Einsatzes einerseits und im oberen Ende des Einsatzes und/oder in der Abdeckkappe anderseits zwischen dem Einfüllstutzeninneren und der Atmosphäre wirkt, wobei das Überdruck-Unterdruckventil in einem eigenständigen Ventilgehäuse (12) gekapselt ist, welches in den Einsatz eingelegt und mit einem Umfangsflansch versehen ist.

Ein derartiger Verschluß ist aus der US-A-4 133 346 bekannt. Diese Schrift zeigt einen Einfüllstutzenverschluß mit einem Überdruck-Unterdruckventil, welches in ein Metallblechgehäuse eingekapselt ist. Das Metallblechgehäuse des Ventiles ist in einen in das Einfüllstutzenende eingreifenden Verschlußeinsatz aus Kunststoff mit Preßsitz eingesetzt. Diese Konstruktion hat den Nachteil, daß ein eigener Kunststoff-Spritzgußvorgang zur Herstellung des Einsatzes erforderlich ist, und daß das Überdruck-Unterdruckventil, nachdem es einmal in den Einsatz eingepreßt worden ist, nicht mehr ausgetauscht werden kann, ohne es dabei zu zerstören. Ein modularer Austausch des Ventils zur Auswahl einer bestimmten Ventilfunktion ist nicht möglich.

Die Erfindung setzt sich zum Ziel, einen Verschluß der einleitend genannten Art zu schaffen, welcher einfacher und kostengünstiger gefertigt und montiert werden kann. Dieses Ziel wird erfindungsgemäß dadurch erreicht, daß der Einsatz aus Blech geformt ist und der Umfangsflansch durch den umgeformten Rand des Einsatzes festgelegt ist.

Die erfindungsgemäße Montage der Überdruck-Unterdruckventilkapsel durch einfaches Umformen des aus Blech gebildeten Einsatzes bietet die Möglichkeit einer Vorfertigung, modularen Bevorratung und einfachen Vor-Ort-Montage von Verschlüssen mit unterschiedlichen Ventilfunktionen bzw. standardisierten Ventilkapseln mit unterschiedlichen äußeren Verschlußformen. Der in kostengünstiger Weise aus Blech geformte Einsatz wird durch das eingelegte Überdruck-Unterdruckventil versteift, so daß die Gefahr einer Verformung und eines unbeabsichtigten Öffnens des Ventiles sehr gering ist.

Bevorzugt weist der Rand des Einsatzes nach innen umschlagbare, vorzugsweise aus einem aufgeschweißten Ring ausgebildete Zungen zur Festlegung des Umfangsflansches des Ventilgehäuses auf, was das Fixieren des Ventilgehäuses sehr einfach gestaltet.

Gemäß einem weiteren bevorzugten Merkmal der Erfindung ist aus einer Falte des Wandmaterials des Einsatzes ein am Umfang des Bodens des Einsatzes nach unten vorragender Kragen ausgebildet, welcher an zumindest zwei über den Umfang verteilten Stellen zur Bildung jeweils eines der genannten Vorsprünge unter Ausnützung des Fließverhaltans des Wandmaterials radial nach außen geschlagen ist. Diese integrierte Art der Fertigung dar Vorsprünge stellt einen entscheidenden Kostenvorteil dar.

Besonders günstig ist es, wenn der Rand des Einsatzes im Anschluß an seinen den Umfangsflansch des Ventilgehäuses festlegendan Umformungsbereich verlängert und unter einem stumpfen Winkel, bevorzugt 160°, nach außen umgeschlagen ist, wobei die Abdeckkappe mit Hilfe von Rastvorsprüngen auf den Umschlag aufgeschnappt ist. Der Umschlag bildet somit eine Auflauffläche, welche die Abdeckkappe bei Einwirken einer radialen Kraft vom Einsatz ablenkt, was die Crashsicherheit weiter erhöht.

In jedem Fall ist es vorteilhaft, wenn der Einsatz an seinem oberen Ende mit radialen Einschnitten für den Eingriff von Innenrippen der Abdeckkappe versehen ist. Dies stellt eine einfache und wirksame Art der Übertragung des zur Betätigung des Verschlusses erforderlichen Drehmomentes von der Abdeckkappe auf den Einsatz dar.

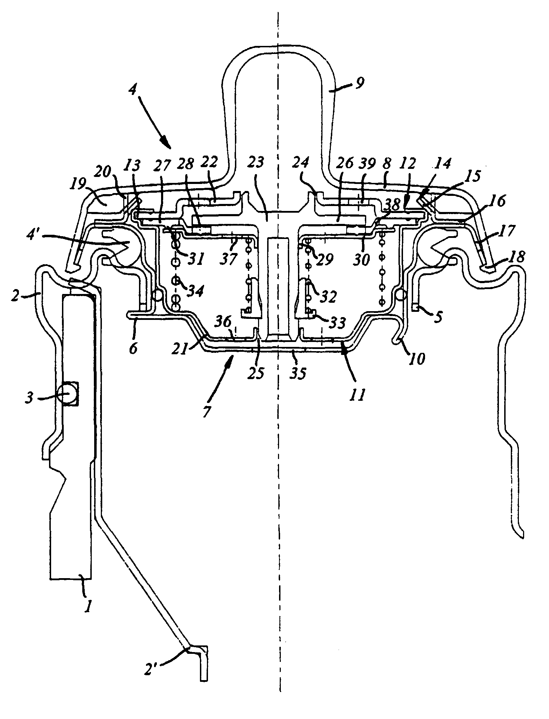

Die Erfindung wird nachstehend an Hand eines in der beigeschlossenen Zeichnung dargestellten Beispieles näher erläutert. Die einzige Figur der Zeichnung zeigt den erfindungsgemäßen Verschluß in Verbindung mit einem ausschnittsweise dargestellten Einfüllstutzen, wobei die linke und die rechte Hälfte der Figur in rechtem Winkel zueinander stehende Axialschnitthälften zeigen.

In der Figur ist das obere Ende 1 eines (nicht weiter dargestellten) Einfüllstutzens gezeigt, der zu einem Fahrzeug-Kraftstofftank führt. Auf das Einfüllstutzenende 1 ist ein Metallring 2 unter Zwischenschaltung eines O-Ringes 3 aufgezogen. Der Metallring 2 dient zur Verankerung eines allgemein mit 4 bezeichneten Verschlusses und weist zu diesem Zweck an seinem Innenumfang Bajonett- oder Schraubnuten 5 für den Eingriff entsprechender (später ausführlicher beschriebener) Vorsprünge 6 des Verschlusses 4 auf. Zwischen dem Verschluß 4 und dem Metallring 2 ist eine ringförmige Formdichtung 4' vorgesehen. Zwischen dem Metallring 2 und der Stirnseite des Einfüllstutzenendes 1 ist ein Führungstrichter 2' zur Führung einer (nicht dargestellten) Zapfpistole zum Betanken festgelegt.

Anstelle der Verwendung eines Metallringes 2 zur Verankerung des Verschlusses 4 könnte das Einfüllstutzenende 1 auch selbst mit entsprechenden Bajonett- oder Schraubnuten 5 ausgebildet sein.

Der Verschluß 4 umfaßt im wesentlichen einen aus Blech geformten topfförmigen Einsatz 7, welcher die Vorsprünge 6 trägt, und eine aus Kunststoff geformte, auf das aus dem Einfüllstutzenende 1 ragende obere Ende des Einsatzes 7 aufgesteckte Abdeckkappe 8. Die Abdeckkappe 8 ist mit einem zentralen Griff 9 versehen.

Die Vorsprünge 6 sind durch bloßes Verformen des Wandmaterials des Einsatzes 7 ausgebildet. Zu diesem Zweck werden aus einer Falte des Wandmaterials ein am Umfang des Bodens des Einsatzes 7 nach unten vorragender Kragen 10 sowie - unter Ausnützung des Fließverhaltens des Wandmaterials - an zumindest zwei über den Umfang verteilten Stellen jeweils ein radial nach außen geschlagener Vorsprung 6 gebildet. Es ist dabei belanglos, ob zuerst die Vorsprünge 6 und anschließend der Kragen 10 durch Umbiegen erzeugt werden oder umgekehrt oder beide Elemente in einem einzigen Verformungsschritt.

Im Einsatz 7 ist ein allgemein mit 11 bezeichnetes Überdruck-Unterdruckventil aufgenommen. Das Überdruck-Unterdruckventil 11 ist zur Gänze in einem zylindrischen Ventilgehäuse 12 eingeschlossen, das an seinem oberen Ende einen Umfangsflansch 13 aufweist, mit welchem es im umgeformten Rand 14 des Einsatzes 7 festgelegt ist. Das Umformen des Randes 14 um den Umfangsflansch 13 herum kann beispielsweise durch Bördeln erfolgen, oder, wie in dem dargestellten Fall, durch Einwärtsbiegen von Zungen 15, die in einem angeschweißten Ring 16 ausgebildet sind. Alternativ könnten die Zungen 15 auch einstückig mit dem restlichen Einsatz 7 ausgeführt sein.

Im Anschluß an den den Umfangsflansch 13 festlegenden Umformungsbereich ist der Rand 14 verlängert und unter einem stumpfen Winkel von etwa 160° bezüglich der Axialrichtung nach außen zurückgeschlagen, so daß sich ein kegelstumpfförmiger Umschlag 17 ergibt, auf welchen die Abdeckkappe 8 mit Hilfe einwärts gerichteter Rastvorsprünge 18 aufgeschnappt werden kann. Die schräge Außenumfangsfläche des Umschlages 17 begünstigt ein Abheben der Abdeckkappe 8 vom Einsatz 7, wenn bei einem Crash eine Radialkraft auf die Abdeckkappe 8 ausgeübt wird.

Die Abdeckkappe 8 ist mit radialen Innenrippen 19 versehen, die in radiale Einschnitte 20 im Ring 16 eingreifen und ein auf die Abdeckkappe aufgebrachtes Drehmoment auf den Einsatz 7 übertragen, um diesen am Einfüllstutzen anzubringen bzw. zu entfernen. Alternativ könnte die Abdeckkappe 8 mit radialen Einschnitten und der Ring 16 mit radialen Rippen versehen werden, z.B. zur einfacheren Spritzgußfertigung der Abdeckkappe.

Das Ventilgehäuse 12 des Überdruck-Unterdruckventiles 11 setzt sich aus einem im wesentlichen topfförmigen Aufnahmeteil 21 aus geformtem Blech und einem Deckelteil 22 aus starrem Material, z.B. einer Metallplatte mit einer Dicke von 3 mm, zusammen. Der Umfangsrand des Deckelteiles 22 wird vom umgeformten oberen Rand des Aufnahmeteiles 21 übergriffen und bildet mit diesem den Umfangsflansch 13 des Ventilgehäuses 12.

Im Ventilgehäuse 12 ist eine Ventilspindel 23 axial beweglich gelagert. Die Ventilspindel 23 durchsetzt eine zentrale Öffnung 24 im Deckelteil 22 und eine zentrale Öffnung 25 im Boden des Aufnahmeteiles 21 und wird von diesen beiden Öffnungen axial geführt.

Die Ventilspindel 23 trägt (einstückig angeformt) einen ersten Ventilteller 26, welcher mit einer Ringdichtung 27 in einem ersten Ringbereich 28 zusammenwirkt. Die Ringdichtung 27 ist zwischen dem Deckelteil 22 und dem Aufnahmeteil 21 festgelegt. Auf der Ventilspindel 23 ist ferner ein Kragen 29 axial beweglich geführt, der einen zweiten Ventilteller 30 trägt, welcher mit der Ringdichtung 27 in einem zweiten Ringbereich 31 zusammenwirkt.

Der erste Ventilteller 26 ist über eine Druckfeder 32, welche zwischen einem auf der Ventilspindel 23 axial fixierten Schulterring 33 und dem zweiten Ventilteller 30 wirkt, in Richtung auf die Ringdichtung 27 hin vorgespannt. Der zweite Ventilteller 30 ist mit Hilfe einer Druckfeder 34, welche sich am Boden des Aufnahmeteiles 21 abstützt, ebenfalls in Richtung auf die Ringdichtung 27 vorgespannt.

Strömungsöffnungen 35 bis 39, die im Einsatz 7, dem Aufnahmeteil 21, dem zweiten Ventilteller 30, der Ringdichtung 27, dem Deckelteil 22 bzw. dem Rand 16 ausgespart sind, geben entweder einen Strömungsweg über den Ventilspalt zwischen erstem Ventilteller 26 und Ringdichtung 27, wenn im Inneren des Einfüllstutzens 1 ein Überdruck herrscht, oder einen Strömungsweg über den Ventilspalt zwischen zweitem Ventilteller 30 und Ringdichtung 27, wenn im Inneren des Einfüllstutzens 1 ein Unterdruck herrscht, frei. Die Funktionsweise eines derartigen Überdruck-Unterdruckventiles ist in der Technik bekannt.

Die Erfindung ist selbstverständlich nicht auf die dargestellte Ausführungsform beschränkt. Beispielsweise kann das Überdruck-Unterdruckventil von jeglicher bekannten Konstruktion oder Funktion sein, z.B. können auch beide Ventilteller konzentrisch an einer Seite der Ringdichtung anliegen. Ferner ist die genaue Form des Einsatzes 7, seiner Vorsprünge 6 und seines Randes beliebig, solange er nur aus kostengünstigem Blech gefertigt werden kann und von dem eingelegten, verkapselten Ventil ausreichend versteift wird.

## Patentansprüche

1. Verschluß für einen Einfüllstutzen, insbesondere eines Fahrzeug-Kraftstofftankes, mit einem in das Einfüllstutzenende abdichtend einsetzbaren, etwa topfförmigen Einsatz, der mit Vorsprüngen zum Eingreifen in Bajonett- oder Schraubgewindenuten des Einfüllstutzens ausgestattet ist, an seinem aus dem Einfüllstutzenende ragenden oberen Ende von einer Abdeckkappe übergriffen ist, und ein Überdruck-Unterdruckventil aufnimmt, welches über Öffnungen im Boden des Einsatzes einerseits und im oberen Ende des Einsatzes und/oder in der Abdeckkappe anderseits zwischen dem Einfüllstutzeninneren und der Atmosphäre wirkt, wobei das Überdruck-Unterdruckventil (11) in einem eigenständigen Ventilgehäuse (12) gekapselt ist, welches in den Einsatz (7) eingelegt und mit einem Umfangsflansch (13) versehen ist, dadurch gekennzeichnet, daß der Einsatz (7) aus Blech geformt ist und der Umfangsflansch (13) durch den umgeformten Rand (14) des Einsatzes (7) festgelegt ist.

2. Verschluß nach Anspruch 1, dadurch gekennzeichnet, daß der Rand (14) des Einsatzes (7) nach innen umschlagbare, vorzugsweise aus einem aufgeschweißten Ring (16) ausgebildete Zungan (15) zur Festlegung des Umfangsflansches (13) des Ventilgehäuses (12) aufweist.

3. Verschluß nach Anspruch 1 oder 2, dadurch gekennzeichnet, daß aus einer Falte des Wandmateriales des Einsatzes (7) ein am Umfang des Bodens des Einsatzes nach unten vorragender Kragen (10) ausgebildet ist, welcher an zumindest zwei über den Umfang verteilten Stellen zur Bildung jeweils eines der genannten Vorsprünge (6) unter Ausnützung des Fließverhaltens des Wandmateriales radial nach außen geschlagen ist.

4. Verschluß nach einem der Ansprüche 1 bis 3, dadurch gekennzeichnet, daß der Rand (14) des Einsatzes (7) im Anschluß an seinen den Umfangsflansch des Ventilgehäuses festlegenden Umformungsbereich (15, 16) verlängert und unter einem stumpfen Winkel, bevorzugt 160°, nach außen umgeschlagen ist, wobei die Abdeckkappe (8) mit Hilfe von Rastvorsprüngen (18) auf den Umschlag (17) aufgeschnappt ist.

5. Verschluß nach einem der Ansprüche 1 bis 4, dadurch gekennzeichnet, daß der Einsatz (7) an seinem oberen Ende (16) mit radialen Einschnitten (20) für den Eingriff von Innenrippen (19) dar Abdeckkappe (8) versehen ist.

## Claims

1. Cap for a filler neck, in particular of a vehicle fuel tank, comprising a substantially pot-shaped insert which can be inserted in a sealing manner into the end of the filler neck, is provided with projections for engaging in bayonet or threaded grooves in the filler neck, is covered at its upper end projecting from the end of the filler neck by an end cap, and receives a pressure/suction relief valve acting between the interior of the filler neck and the atmosphere via openings, on the one hand, in the bottom of the insert and, on the other hand, in the upper end of the insert and/or in the end cap, the pressure/suction relief valve (11) being encapsulated in an independent valve housing (12) which is placed in the insert (7) and is provided with a circumferential flange (13), characterised in that the insert (7) is formed from sheet metal and the circumferential flange (13) is secured by the formed edge (14) of the insert (7).

2. Cap according to claim 1, characterised in that the edge (14) of the insert (7) is provided with inwardly foldable tongues (15) preferably formed from a welded-on ring (16) for securing the circumferential flange (13) of the valve housing (12).

3. Cap according to claim 1 or claim 2, characterised in that a downwardly projecting collar (10) is formed on the circumference of the bottom of the insert from a fold in the wall material of the insert (7), and is folded radially outwards at least at two points distributed over the circumference, each forming one of the said projections (6) using the flow characteristics of the wall material.

4. Cap according to one of claims 1 to 3, characterised in that the edge (14) of the insert (7) is extended after its forming region (15, 16) securing the circumferential flange of the valve housing and is folded outwards at an obtuse angle, preferably 160°, the end cap (8) being snapped on to the bead (17) with the aid of locking projections (18).

5. Cap according to one of claims 1 to 4, characterised in that the insert (7) is provided at its upper end (16) with radial notches (20) for the engagement of internal ribs (19) on the end cap (8).

## Revendications

1. Obturateur pour une tubulure de remplissage, en particulier d'un réservoir de carburant pour automobile, comprenant un insert approximativement en forme de godet, susceptible d'être mis en place dans l'extrémité de la tubulure de remplissage en l'étanchant, ledit insert étant équipé de saillies destinées à s'engager dans des rainures à baïonnette ou des rainures en pas de vis de la tubulure de remplissage, étant coiffé par un capuchon de couverture à son extrémité supérieure qui dépasse hors de l'extrémité de la tubulure de remplissage, et abritant une soupape de surpression/dépression, laquelle agit entre l'intérieur de la tubulure de remplissage et l'atmosphère via des ouvertures dans le fond de l'insert d'une part et dans l'extrémité supérieure de l'insert et/ou dans le capuchon de couverture d'autre part, dans lequel la soupape de surpression/dépression (11) est encapsulée dans un boîtier de soupape autonome (12), lequel est mis en place dans l'insert (7) et est pourvu d'une bride périphérique (13), caractérisé en ce que l'insert (7) est formé en tôle, et la bride périphérique (13) est fixée par la bordure rabattue (14) de l'insert (7).

2. Obturateur selon la revendication 1, caractérisé en ce que la bordure (14) de l'insert (7) comporte des languettes (15), réalisées de préférence à partir d'une bague rapportée par soudure (16) et susceptibles d'être rabattues vers l'intérieur, afin de fixer la bride périphérique (13) du boîtier de soupape (12).

3. Obturateur selon l'une ou l'autre des revendications 1 et 2, caractérisé en ce qu'une collerette (10) est réalisée à partir d'un pli du matériau de paroi de l'insert (7), ladite collerette dépassant vers le bas à la périphérie du fond de l'insert, et étant enfoncée radialement vers l'extérieur à au moins deux emplacements répartis à la périphérie afin de former respectivement l'une desdites saillies (6) en exploitant le comportement au fluage du matériau de la paroi.

4. Obturateur selon l'une des revendications 1 à 3, caractérisé en ce que la bordure (14) de l'insert (7) est prolongée à la suite de sa région de déformation (15, 16) qui détermine la bride périphérique du boîtier de soupape, et est rabattue vers l'extérieur sur un angle obtus, de préférence 160°, et en ce que le capuchon de couverture (8) est encliqueté sur le rabattement (17) à l'aide de saillies d'enclenchement (18).

5. Obturateur selon l'une des revendications 1 à 4, caractérisé en ce que l'insert (7) est pourvu à son extrémité supérieure (16) d'entailles radiales (20) pour l'engagement de nervures intérieures (19) du capuchon de couverture (8).
